# EUROPEAN PATENT SPECIFICATION

(11) **EP 2 431 930 B1**
(45) Date of publication and mention of the grant of the patent: **03.04.2013**
(21) Application number: 11008951.3
(22) Date of filing: 12.04.2010
(51) Int. Cl.: G06Q 10/08, H04W 52/00

(54) **Identification system for luggage**
Identifizierungssystem für Gepäck
Système d'identification pour bagages

(30) Priority: 16.04.2009 IT BG20090015
(43) Date of publication of application: 21.03.2012
(62) Divisional of application: 10723767.9
(73) Proprietor: Balzarini, Angelo, 24060 Rogno (Bergamo) (IT)
(72) Inventor: Balzarini, Angelo, 24060 Rogno (Bergamo) (IT)
(74) Representative: Gatti, Enrico

(56) References cited:
- WO-A2-02/15758
- WO-A2-2006/093992
- US-A1- 2006 023 679
- US-A1- 2008 143 484

## Description

The present invention relates to an identification system for luggage, packages and goods in general (containers) and to an identification method for luggage, packages and goods in general (containers).

The delivery of luggage and packages, in particular in airports and other places, often creates problems for the user, who has to stand in lengthy and tiring queues for their identification, and possibly to reclaim lost luggage. Taking as an example the transportation of luggage within an airport, this has to be identified, normally by a card indicating the details of the owner.

The airline has to associate with each piece of luggage its own identification tag, including all information regarding the destination, the airline and possibly other information. The luggage has also to be checked at various points along their path.

This information is normally applied to the luggage by various means, for example by cards or by a bar code such that the information can be easily read off at any point in which the luggage has to pass a checking or sorting point.

Documents US 2008/0143484 and US 2006/023679 disclose a wireless tag which is attached to each item of the passenger's luggage. A wireless reader tag near the check-in counter detects, logs the luggage tags, and downloads a profile, comprising the airline, the name of the passenger, origin and destination of the flight, stored in it. Other wireless tag reader are placed on the conveyer belt, on the trucks that deliver the luggage to the plane, on the plane and at the destination baggage pickup.

WO 2006/093992 discloses a RFID reader for reading identifications of proximately located RFID tagged items in the environment. A communicator is coupled to the RFID reader to receive the read identifications and then communicate the received read identifications over the wireless interface, through one of the gateways, to the central data processing system.

WO 02/15758 discloses a storage unit for secure storage, the storage unit having a communications interface for communicating with a delivery management system, wherein the storage unit receives an authorisation access code including an authorised time slot from the delivery management system, the storage unit enabling access thereto responsive to use of the authorisation access code in the authorised time slot at a user interface.

An object of the present invention is to provide an identification system for luggage and packages which is of simple implementation.

Another object of the present invention is to enable the information contained in the identification system to be easily read off.

These and other objects are attained according to the present invention by a luggage and package identification system, according to claim 1.

Further characteristics of the invention are described in the dependent claims.

The characteristics and advantages of the present invention will be apparent from the ensuing detailed description of one embodiment thereof, illustrated by way of non-limiting example in the accompanying drawings, in which:

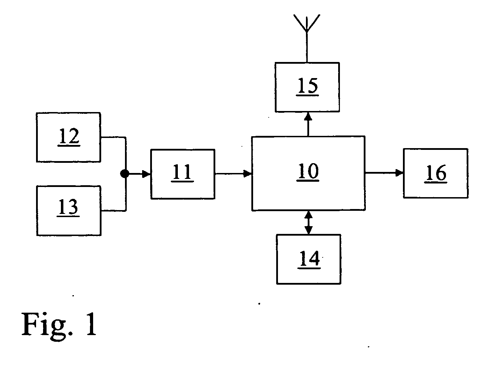

Figure 1 shows a block scheme of the luggage and package identification system according to the present invention.

With reference to the accompanying figures, a luggage and package identification system according to the present invention comprises a microcontroller 10 powered by a preferably rechargeable battery 11.

The battery 11 can be recharged by connecting to an external battery charger via the connector 12. Alternatively it can be recharged by one or more solar cells 13 positioned external to the system.

The system comprises a memory 14, of non-volatile or permanent (ROM) type, which can also be incorporated in the microcontroller 10.

The microcontroller 10 communicates with the outside via radio, by means of bluetooth technology. In this respect, a Bluetooth interface 15 is associated with the microcontroller 10.

An electromagnetic actuator is also connected to the microcontroller 10 in order to open and close a luggage lock.

The aforedescribed luggage and package identification system is then inserted for compactness into a small-dimension container. It is then fixed to the luggage by straps or, more preferably, it can be positioned inside the luggage, or it can form an integral part of the luggage and be incorporated into it during production. For external access the container can have a connector for battery recharging or a cable for connection to solar (photovoltaic) cells which can also be produced and inserted into the luggage during their production.

The operation of the device of the invention is apparent from that described and illustrated, and is essentially as follows.

Using a cellular phone or computer (provided with bluetooth technology), the luggage owner communicates with the luggage and package identification system, and in particular to the interface 15, and inserts personal data such as name, surname, address, telephone number, passport number, goods transported and anything else considered worth storing.

The microcontroller 10 will have been previously programmed to request the owner information and to store it in the non-volatile memory 15.

A suitable programme in the cellular phone or computer could facilitate insertion of these data.

An insertable password could be provided for use in maintaining data security.

For controlling the information stored in the system, a device equipped with bluetooth technology could interrogate the system and receive the information contained therein.

For air transport, for example during check-in, the airline would be able to insert further data of its own interest such as the flight number, destination, any stopovers, etc. These data would also be stored in the non-volatile memory 15.

The airline operators and those responsible for luggage sorting are able to easily and automatically access the stored data, because if a computer provided with Bluetooth (and a programme facilitating operation) is installed at the luggage passage control point, then all the data memorized by the luggage will appear on the screen without using a reader (such as a bar code reader).

It is hence apparent that the present system simplifies the luggage and package identification operations.

Neither the luggage and package identification system described herein nor any programmes necessary to facilitate writing and reading of the stored information will be further described in detail, as an expert of the art, based on the aforegoing, is able to implement them.

## Claims

1. A luggage identification system, said system is contained in a container, said container being fixed to said luggage; said system comprising: a rechargeable battery (11) powering said system by means of solar cells (13); a microcontroller (10); a bluetooth radio communication (15) associated with said microcontroller (10); a non-volatile memory (14) of permanent type associated with said microcontroller (10); wherein said identification information for said luggage is stored in said memory (14); said information being accessible by said bluetooth radio communication (15); said identification information comprises details of the owner of said luggage; information relative to the destination of said luggage and information relative to the airline; said system comprises means (16) for opening the opening lock of said luggage, enabled by said bluetooth radio communication (15).

## Patentansprüche

1. Gepäckstück-Identifikationssystem, wobei das System in einem Behältnis enthalten ist, wobei das Behältnis an dem Gepäckstück befestigt ist, wobei das System umfasst: eine wiederaufladbare Batterie (11), durch die das System mit Hilfe von Solarzellen (13) gespeist wird, einen Mikrocontroller (10), eine Bluetooth-Funkkommunikationseinrichtung (15), die mit dem Mikrocontroller (10) in Beziehung steht, und einen nichtflüchtigen Speicher (14) vom permanenten Typ, der mit dem Mikrocontroller (10) in Beziehung steht, wobei die Identifikationsinformation für das Gepäckstück in dem Speicher (14) gespeichert ist, wobei die Information durch die Bluetooth-Funkkommunikationseinrichtung (15) zugreifbar ist, wobei die Identifikationsinformation Daten des Eigentümers des Gepäckstücks, Informationen bezüglich des Ziels des Gepäckstücks und Informationen bezüglich der Fluggesellschaft umfasst, und wobei das System eine Einrichtung (16) zum Öffnen des Schlosses des Gepäckstücks aufweist, die die durch die Bluetooth-Funkkommunikationseinrichtung (15) aktiviert wird.

## Revendications

1. Système d'identification pour bagages, ledit système étant contenu dans un contenant, ledit contenant étant fixé audit bagage, ledit système comprenant : une batterie rechargeable (11) alimentant ledit système par l'intermédiaire de cellules solaires (13), un microcontrôleur (10) ; une communication radio sans fil selon la technologie Bluetooth (15) associée audit microcontrôleur (10), une mémoire non volatile (14) de type permanente associée audit microcontrôleur (10), dans lequel lesdites informations d'identification de ladite valise sont stockées dans ladite mémoire (14), lesdites informations étant accessibles au moyen de ladite communication radio Bluetooth (15), lesdites informations d'identification comprennent l'identification du propriétaire dudit bagage, des informations relatives à la destination dudit bagage et des informations relatives à la compagnie aérienne. ledit système comprend des moyens (16) pour ouvrir le verrou d'ouverture dudit bagage, activé au moyen de ladite communication radio Bluetooth (15).
